# EUROPÄISCHE PATENTANMELDUNG

(11) **EP 1 193 128 A1**
(43) Veröffentlichungstag der Anmeldung: **03.04.2002**
(21) Anmeldenummer: 01123411.9
(22) Anmeldetag: 28.09.2001
(51) Int. Cl.: B60R 1/00, B60R 11/04

(54) **Vorrichtung zur Erfassung des rückwärtigen und seitlichen Raumes eines Fahrzeugs**

(30) Priorität: 02.10.2000 DE 20017064 U
(71) Anmelder: Dominik, Hans, 72461 Albstadt (DE)
(72) Erfinder: Dominik, Hans, 72461 Albstadt (DE)
(74) Vertreter: Möbus, Daniela, Dr.-Ing.

(57) **Zusammenfassung**

Eine Vorrichtung (11) zur Erfassung des rückwärtigen und seitlichen Raumes eines Fahrzeugs (10) mit mindestens einer Kamera (12), wobei die Kamera (12) auf einem über die seitliche und/oder hintere Fahrzeugbegrenzung hinaus ausfahrbaren Träger (14) angeordnet ist.

## Beschreibung

Die Erfindung betrifft eine Vorrichtung zur Erfassung des rückwärtigen und seitlichen Raumes eines Fahrzeugs mit mindestens einer Kamera.

Es sind schon verschiedentlich Lösungen vorgeschlagen worden, bei denen mittels einer Kamera auch der so genannte tote Winkel eines Außenspiegels erfasst und dem Fahrer auf einem Monitor angezeigt wird. Eine Kamera hat gegenüber einem gewölbten Außenspiegel den Vorteil, dass die Darstellung verzerrungsfrei ist. Bei den bisher vorgeschlagenen Lösungen wurde die Kamera entweder anstelle des Außenspiegels montiert oder an einer zentralen Stelle an der Rückseite des Fahrzeugs. Die letztere Position hat den Vorteil, dass dann auch der Innenspiegel des Fahrzeugs durch die Kamera ersetzbar ist.

Alle vorgeschlagenen Lösungen eignen sich für vorwärts fahrende Kraftfahrzeuge, jedoch nur bedingt zur Unterstützung und Erleichterung des Rückwärtsfahrens von Nutzfahrzeugen, insbesondere, wenn am Fahrzeug zusätzlich ein Anhänger angeordnet ist.

Der vorliegenden Erfindung liegt die Aufgabe zugrunde, eine Vorrichtung mit einer Kamera vorzuschlagen, mit der das Rückwärtsrangieren insbesondere auch von Nutzfahrzeugen mit Anhängern erleichtert wird.

Die Aufgabe wird mit einer Vorrichtung zur Erfassung des rückwärtigen und seitlichen Raumes eines Fahrzeugs mit mindestens einer Kamera gelöst, wobei die Kamera auf einem über die seitliche und/oder hintere Fahrzeugbegrenzung hinaus ausfahrbaren Träger angeordnet ist. Durch die ausfahrbare Anordnung der Kamera können jetzt ganz andere Winkelbereich heim Rückwärtsfahren erfasst werden als bei einer fest montierten Kamera. Es ist dann sogar möglich, beim Rückwärtsstoßen um eine Kurve die Kurvenaußenseite bis zum Ende des gesamten Fahrzeugs einschließlich eines eventuell vorhandenen Anhängers einzusehen. Dies war bisher mit fest montierten Kameras oder allein mit Außenspiegeln nicht möglich.

Der Träger kann schwenkbar und/oder teleskopartig ausfahrbar sein, wobei seine Betätigung sowohl manuell als auch elektrisch, pneumatisch oder hydraulisch erfolgen kann. Bei einer bevorzugten Ausführungsform ist der Träger am vorderen Ende eines Fahrzeugaufbaus angeordnet, sodass außer dem rückwärtigen Raum auch der gesamte seitliche Raum des Fahrzeugs durch die Kamera einsehbar ist.

Die von der Kamera aufgenommenen Bilder können in an sich bekannter Weise auf einem Monitor im Fahrzeuginnenraum angezeigt werden. Die Kamera kann dabei auch bei stehendem Fahrzeug mit Vorteil eingesetzt werden, beispielsweise beim Beund Entladen eines Fahrzeugs, das damit vom Fahrerhaus überwacht werden kann.

Weitere Vorteile ergeben sich, wenn die Kamera schwenkbar am Träger angeordnet ist. Dadurch lässt sich der erfassbare Raum mühelos den aktuellen Gegebenheiten anpassen. Dabei ist es von Vorteil, wenn die Kamera mittels einer Funkfernhedienung sowohl ein- und ausschaltbar als auch verstellbar ist.

Um auch mit ausgefahrenem Träger fahren zu können und die Kamera vor Witterungseinflüssen zu schützen, kann die Kamera in einem vorzugsweise aerodynamisch ausgebildeten Schutzgehäuse angeordnet sein.

Bei Einsatz der Kamera bei Nacht ist es außerdem zweckmäßig, auf dem Träger zusätzlich eine Beleuchtungsvorrichtung vorzusehen, mit der der seitliche und rückwärtige Raum des Fahrzeugs vollständig ausgeleuchtet werden kann, was allein mit den Rückfahrscheinwerfern nicht möglich ist. Ist die Vorrichtung solchermaßen ausgebildet, so ermöglicht sie nicht nur ein problemloses Rückwärtsfahren oder Rückwartsrangieren zu allen Tageszeiten, sondern auch die Überwachung von Be- und Entladevorgängen bei Tag und Nacht.

Nachfolgend wird ein bevorzugtes Ausführungsbeispiel einer erfindungsgemäßen Vorrichtung anhand der Zeichnung näher erläutert.

Es zeigen:

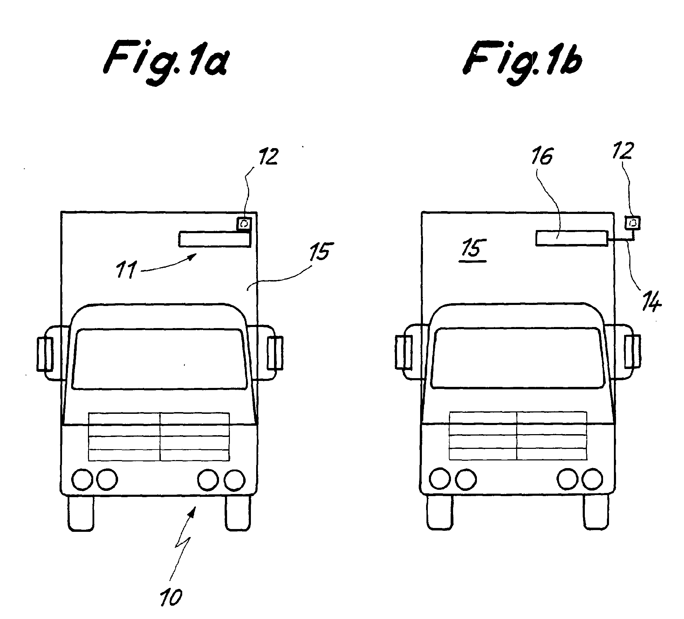

- Fig. 1a: ein Fahrzeug mit einer erfindungsgemäßen Vorrichtung im eingefahrenen Zustand;
- Fig. 1b: das Fahrzeug aus Fig. 1a) mit einer erfindungsgemäßen Vorrichtung im ausgefahrenen Zustand.

Das Fahrzeug 10 aus Fig. 1 weist eine Vorrichtung 11 zur Überwachung des seitlichen und rückwärtigen Raumes des Fahrzeugs 10 mit einer Kamera 12 auf, wobei die Vorrichtung 11 am vorderen Bereich eines Fahrzeugaufbaus 15 angeordnet ist.

Wie Fig. 1b zeigt, ist die Kamera 12 an einem seitlich über die Fahrzeugbegrenzung hinaus ausfahrbaren Träger 14 angeordnet. Der Träger 14 wird dabei in einem Rohr 16 geführt. Die Kamera 12 kann zusätzlich schwenkbar am Träger 14 und mittels einer Funkfernbedienung manipulierbar sein. Die von ihr übermittelten Bilder können in einem hier nicht näher dargestellten Monitor im Führerhaus des Fahrzeugs 10 angezeigt werden.

Anstelle eines ausfahrbaren Trägers 14 kann selbstverständlich auch ein ausschwenkbarer Träger vorgesehen werden. Zusätzlich zur Kamera 12 lässt sich auf dem Träger 14 außerdem auch eine Beleuchtungsvorrichtung vorsehen, sodass die Vorrichtung 11 bei Tag und Nacht einsetzhar ist.

## Patentansprüche

1. Vorrichtung (11) zur Erfassung des rückwärtigen und seitlichen Raumes eines Fahrzeugs (10) mit mindestens einer Kamera (12), **dadurch gekennzeichnet, dass** die Kamera (12) auf einem über die seitliche und/oder hintere Fahrzeugbegrenzung hinaus ausfahrbaren Träger (14) angeordnet ist.

2. Vorrichtung nach Anspruch 1, **dadurch gekennzeichnet, dass** der Träger (14) schwenkbar und/oder teleskopartig ausfahrbar ist.

3. Vorrichtung nach Anspruch 1 oder 2, **dadurch gekennzeichnet, dass** der Träger (14) manuell, elektrisch, pneumatisch oder hydraulisch ausfahrbar ist.

4. Vorrichtung nach einem der Ansprüche 1 bis 3, **dadurch gekennzeichnet, dass** der Träger (14) am vorderen Ende eines Fahrzeugaufbaus (15) angeordnet ist.

5. Vorrichtung nach einem der Ansprüche 1 bis 4, **dadurch gekennzeichnet, dass** die von der Kamera (12) aufgenommenen Bilder auf einem Monitor im Fabrzeuginnenraum anzeigbar sind.

6. Vorrichtung nach einem der Ansprüche 1 bis 5, **dadurch gekennzeichnet, dass** die Kamera (12) schwenkbar am Träger (14) angeordnet ist.

7. Vorrichtung nach einem der Ansprüche 1 bis 6, **dadurch gekennzeichnet, dass** die Kamera (12) mittels einer Funkfernbedienung ein- und ausschaltbar sowie verstellbar ist.

8. Vorrichtung nach einem der Ansprüche 1 bis 7, **dadurch gekennzeichnet, dass** die Kamera (12) in einem vorzugsweise aerodynamisch ausgebildeten Schutzgehäuse angeordnet ist.

9. Vorrichtung nach einem der Ansprüche 1 bis 8, **dadurch gekennzeichnet, dass** auf dem Träger (14) zusätzlich eine Beleuchtungsvorichtung angeordnet ist.
